# FASCICULE DE BREVET EUROPEEN

(11) **EP 2 460 742 B1**
(45) Date de publication et mention de la délivrance du brevet: **31.05.2017**
(21) Numéro de dépôt: 11191990.8
(22) Date de dépôt: 05.12.2011
(51) Int. Cl.: B65F 1/14

(54) **Conteneur d'apport volontaire pour la collecte de déchets**
Müllsammelbehälter
Waste collecting container

(30) Priorité: 03.12.2010 FR 1060082
(43) Date de publication de la demande: 06.06.2012
(73) Titulaire: Compagnie Plastic Omnium, 69007 Lyon (FR)
(72) Inventeur: Troton, Jean, 01800 MEXIMIEUX (FR)
(74) Mandataire: Remy, Vincent Noel Paul

(56) Documents cités:
- EP-A1- 1 386 860
- AT-U1- 10 122
- FR-A1- 2 942 215
- US-A- 5 901 874

## Description

La présente invention concerne un conteneur d'apport volontaire, notamment pour la collecte du verre.

Les gros conteneurs pour la collecte du verre, lorsqu'ils ne sont pas enterrés dans le sol, sont des objets très volumineux placés sur la voie publique. Leur grande contenance permet d'accumuler une quantité importante de verre avant de faire venir un camion de collecte qui les vide dans sa benne. Il est donc souhaitable de leur conserver de grandes dimensions.

Cette nécessité de disposer d'un grand volume, combinée à la recherche d'un encombrement minimal sur la chaussée, conduit à donner à ces conteneurs une grande hauteur mais, pour profiter de cette hauteur, il est nécessaire que l'ouverture d'introduction des déchets dans le conteneur se trouve le plus haut possible. Sinon le volume utile du conteneur serait très inférieur à son volume réel.

Il en résulte une gène pour les personnes de petite taille et plus généralement pour toutes les personnes à mobilité réduite qui ne peuvent pas facilement se hisser à la hauteur de l'ouverture d'introduction des déchets.

La présente invention vise à proposer un nouveau conteneur d'apport volontaire pour la collecte de déchets qui offre aux personnes à mobilité réduite la possibilité de l'utiliser même s'il est de grande hauteur.

On connaît déjà du document AT-U- 010 122 un conteneur d'apport volontaire pour la collecte de déchets, comprenant une ouverture supérieure pour l'introduction des déchets et une ouverture inférieure située à la verticale de l'ouverture supérieure, à une hauteur par rapport au sol permettant l'introduction des déchets par des personnes de petite taille, le conteneur comprenant en outre, dans son intérieur, entre l'ouverture supérieure et l'ouverture inférieure, un déflecteur qui est positionné de manière à recevoir des déchets introduits par l'ouverture et chutant dans le conteneur, ledit déflecteur étant réalisé en un matériau apte à amortir la chute des déchets et étant conformé pour guider les déchets depuis l'ouverture supérieure d'introduction des déchets, sur une trajectoire dégageant l'ouverture inférieure d'introduction des déchets, jusqu'à un emplacement de chute, à l'intérieur du conteneur, qui est plus bas et horizontalement espacé de l'ouverture supérieure d'introduction des déchets, le déflecteur comprenant au moins une paroi de séparation entre déchets introduits par l'ouverture supérieure et déchets introduits par l'ouverture inférieure, cette paroi étant sensiblement verticale. Selon l'invention, la paroi de séparation est souple. La paroi de séparation du conteneur peut s'étendre sur une hauteur allant de quelques dizaines de centimètres, de préférence au moins 10 cm, jusqu'à la quasi totalité de la hauteur libre sous l'ouverture inférieure.

Grâce au déflecteur, le remplissage du conteneur s'effectue selon un cône de remplissage dont l'axe de symétrie est voisin du centre du conteneur. En outre, l'ouverture inférieure, placée en-dessous et à la verticale de l'ouverture supérieure, bénéficie d'un volume de remplissage réservé qui est défini par l'intersection du cône de remplissage avec le déflecteur. Ainsi, même si le conteneur est beaucoup rempli, c'est-à-dire si le volume de déchets dans le conteneur atteint le déflecteur, il subsiste un petit volume disponible pour l'introduction de déchets par l'orifice inférieur.

Par sa souplesse, la paroi de séparation du déflecteur est capable de se déformer pour s'adapter au volume de déchets présents dans le conteneur, ce qui, à la fois, évite la dégradation du déflecteur et permet une utilisation optimale du volume intérieur du conteneur.

On définit ainsi le critère de souplesse de la paroi de séparation selon l'invention : son aptitude à se déformer pour s'adapter aux volumes de déchets introduits dans le conteneur. Ainsi, le volume réservé pour les déchets introduits par l'ouverture inférieure peut se réduire ou s'agrandir en fonction des besoins et du remplissage du reste du volume intérieur du conteneur.

En conséquence, le caractère « sensiblement vertical » de cette paroi de séparation signifie qu'au repos, c'est-à-dire en l'absence de déchets dans le conteneur exerçant un appui sur elle, elle s'étend globalement parallèlement à la verticale.

Dans un mode de réalisation préféré de l'invention, le déflecteur est réalisé en un matériau phoniquement isolant.

Le matériau approprié pour constituer le déflecteur peut être choisi dans la liste suivante : tissu, grillage, feutre, carton, matière plastique.

De façon préférée, si le feutre est retenu, on utilisera un feutre polyéthylène, lequel présente l'avantage d'être recyclable en même temps que l'enveloppe en polyéthylène du conteneur. Des feutres à base de polypropylène ou de PET (polyéthylène-téréphtalate ou poly(téréphtalate d'éthylène)) peuvent néanmoins être aussi utilisés.

Un avantage du feutre en matière plastique est qu'il peut être mis en forme par thermoformage et offrir, de ce fait, des zones de fixation appropriées aux endroits appropriés, permettant par exemple la fixation du déflecteur sur le conteneur par rivetage, collage, vissage.

Dans un mode de réalisation particulier, le déflecteur comprend des parois à double épaisseur dans sa partie supérieure, notamment dans ses parties les plus fortement sollicités par la chute des déchets ou par les fixations au conteneur. Ces doubles épaisseurs peuvent être obtenues par repliage de la feuille de matériau réalisant le déflecteur, le cas échéant.

Avantageusement, les feutres et autres matériaux utilisés sont imperméables, non absorbants face aux liquides et imputrescibles.

Dans un mode de réalisation particulier, le déflecteur est soutenu par un lien mécanique relié à la structure interne du conteneur, par exemple à ses moyens de levage. Un tel lien peut être un ressort, un câble ou une barre métallique.

De préférence, l'ouverture supérieure du conteneur se situe à moins de 1,7 mètre du sol et l'ouverture inférieure à moins de 1,2 mètre du sol.

L'invention procure donc un conteneur pour la collecte de déchets qui, d'une part, émet peu de bruit lorsqu'on y introduit un déchet grâce à l'effet amortissant du déflecteur et à la réduction de hauteur de chute que procure le déflecteur, et d'autre part, permet une utilisation par des personnes de petite taille qui ne pourraient pas accéder à l'orifice supérieur d'introduction des déchets, situé trop haut.

Dans un mode de réalisation particulièrement avantageux, le déflecteur est réalisé en une seule et même pièce, dont la tenue en partie supérieure et la souplesse en partie inférieure sont obtenues par sa forme. Par exemple, la partie supérieure du déflecteur peut être un polyèdre possédant des arêtes vives (obtenues par pliage ou soudage ou collage) lui conférant une rigidité suffisante pour qu'il soit capable de dévier des déchets chutant dans le conteneur par l'ouverture supérieure, tandis que la paroi de séparation du déflecteur, réalisée dans le même matériau, n'est formée que d'un ou plusieurs pans dépourvus d'arêtes vives.

Les avantages résultants d'un tel mode de réalisation sont :
- réduction de coût de fabrication,
- réduction du temps de main d'oeuvre,
- amélioration de l'acoustique du conteneur.

Si le déflecteur doit comporter plusieurs pièces, il peut en particulier comprendre un cadre ou une plaque métallique dans sa partie supérieure, pour garantir sa tenue dans le temps et faciliter sa fixation sur le conteneur.

Avantageusement, la conformation du déflecteur, définie selon l'invention comme permettant de guider les déchets depuis l'ouverture supérieure d'introduction des déchets sur une trajectoire dégageant l'ouverture inférieure d'introduction des déchets jusqu'à un emplacement de chute à l'intérieur du conteneur, horizontalement espacé de l'ouverture supérieure d'introduction des déchets, est obtenu par un plan incliné. Cette inclinaison doit être suffisamment faible pour écarter les déchets jusqu'à leur emplacement de chute souhaité, mais ne doit génêr en rien le vidage du conteneur. En pratique, elle doit le plus souvent être supérieure à 30°, bien que cette valeur ne soit pas limitative.

Afin de mieux faire comprendre l'invention, on va en décrire maintenant des modes de réalisation donnés à titre d'exemples non limitatifs de la portée de l'invention, en référence aux dessins annexés dans lesquels :
- la figure 1 est une vue en perspective d'un conteneur pour la collecte de verre,
- la figure 2 est une vue en perspective d'un déflecteur placé dans le conteneur de la figure 1,
- la figure 3 est une vue en coupe selon III-III du conteneur de la figure 1,
- la figure 4 est une vue analogue à la figure 3 d'un conteneur selon un autre mode de réalisation,
- la figure 5 est une vue analogue à celle de la figure 2 d'un déflecteur selon une variante.

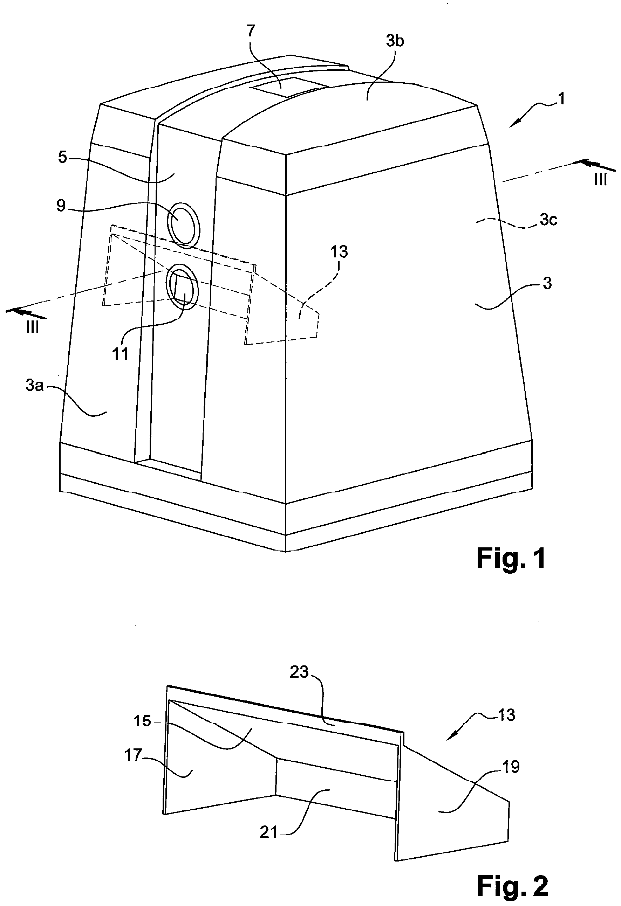

Le conteneur de la figure 1 a une hauteur de 1, 85 mètre et une base de 1,615 mètre sur 1,55 mètre. Il comprend un corps 3, qui peut être réalisé en différents matériaux, notamment en matière plastique et préférentiellement en polyéthylène. Une méthode de fabrication d'un tel corps est le rotomoulage.

Le corps 3 a une forme sensiblement pyramidale. Il présente un renfoncement en forme de bande verticale 5 sur ses parois avant 3a, supérieure 3b et arrière 3c. Cette bande 5 remplit une fonction esthétique et une fonction mécanique de rigidification du corps 3.

Dans la bande 5 et sur la paroi avant 3a du corps 3, le conteneur comprend deux ouvertures placées l'une au-dessus de l'autre : une ouverture supérieure d'introduction des déchets 9 et une ouverture inférieure d'introduction des déchets 11, située à la verticale de l'ouverture supérieure 9. Ces deux ouvertures 9 et 11 sont prévues pour l'introduction de flacons en verre tels que des bouteilles. Ils peuvent être munis de différents obturateurs escamotables tels que brosse, clapet (non représentés), comme cela est bien connu.

A l'intérieur du conteneur, un déflecteur 13 en forme de polyèdre (représenté en traits interrompus sur la figure 1) est placé contre la face interne de la paroi 3a, de manière à séparer les deux ouvertures supérieure 9 et inférieure 11.

Ce déflecteur 13, mieux visible sur la figure 2, comprend un plan incliné 15 qui, lorsque le déflecteur est fixé en position d'utilisation dans le conteneur, descend en s'éloignant de la paroi 3a vers le centre du conteneur, deux parois latérales 17 et 19, une paroi de fond sensiblement verticale 21 et une petite bande frontale 23 qui vient se plaquer contre la face intérieure de la paroi 3a et permet la fixation du déflecteur par tout moyen approprié tel que collage, soudage, rivetage, vissage.

La paroi de fond 21 constitue une paroi de séparation entre déchets introduits par l'ouverture supérieure 9 et déchets introduits par l'ouverture inférieure 11.

Le déflecteur 13 peut être réalisé en différents matériaux à condition que ces matériaux présentent la propriété d'amortir les chocs grâce à leur aptitude à la déformation de façon plastique ou de façon élastique. Un matériau utilisable pour réaliser le déflecteur 13 est un grillage métallique souple ou une feuille de feutre.

Grâce au déflecteur 13, les déchets introduits dans le conteneur par l'ouverture supérieure 9 sont guidés vers l'intérieur du conteneur en évitant de passer devant l'ouverture inférieure 11, au sens où un déchet introduit par cette ouverture inférieure 11 ne rencontrerait pas un déchet introduit par l'ouverture supérieure. En fin de guidage, le déchet chute à proximité du centre du conteneur. Ce guidage s'effectue sur le plan incliné 15 du déflecteur qui, outre sa fonction de guidage, réalise une fonction d'amortissement phonique en absorbant les bruits émis à l'extérieur du conteneur.

Grâce au guidage réalisé par le déflecteur, le conteneur se remplit suivant un cône de remplissage 25 dont l'axe de symétrie 27 est voisin du centre du conteneur.

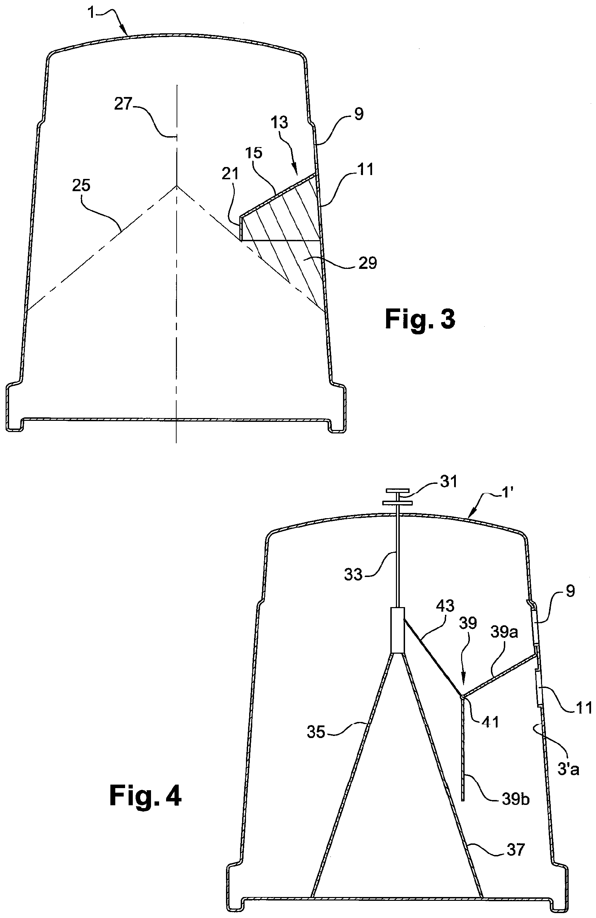

On voit, sur la figure 3, que lorsque le cône de remplissage 25 arrive à hauteur de la paroi de fond 21 du déflecteur, il subsiste, sous le déflecteur, un volume 29 (hachuré sur la figure 3) qui constitue un volume de réserve pour le remplissage du conteneur par l'orifice inférieur d'introduction des déchets 11.

Ainsi, même lorsque le conteneur est complètement rempli, une personne de petite taille peut utiliser l'ouverture inférieure d'introduction des déchets pour déposer des flacons dans le conteneur.

Il est important, selon l'invention, que le déflecteur 13 soit apte à se déformer de manière que sa présence dans le conteneur n'engendre pas une perte de volume utile du conteneur. Un déflecteur trop rigide, notamment sa paroi de séparation 21, pourrait gêner l'imbrication des flacons dans le conteneur et réduire de façon importante son volume utile. Au contraire, avec un déflecteur souple, les flacons peuvent s'agencer les uns par rapport aux autres de façon optimale en n'étant pas gênés dans leurs mouvements par le déflecteur.

Le déflecteur doit toutefois présenter une rigidité suffisante pour pouvoir guider un flacon introduit par l'orifice supérieur.

Dans le cas du déflecteur de la figure 2, chaque feuille du matériau dont il est constitué doit présenter une rigidité intermédiaire, de sorte que sa tenue en partie supérieure et sa souplesse en partie inférieure sont obtenues par sa forme. Ainsi, la rigidité de sa partie supérieure, supportant le plan incliné 15, résulte de la présence des lignes de pliage entre ses parois et bande frontale 15, 17, 19, 21 et 23, tandis que la paroi de séparation sensiblement verticale 21, qui est plus petite et qui peut aussi être plus fine, peut suivre une déformation pour s'adapter aux volumes de déchets présents de part et d'autre dudit déflecteur 13.

Dans le mode de réalisation de la figure 4, le conteneur 1' est muni d'une structure interne permettant son levage. Cette structure, connue en soi, comprend une anse de préhension 31, un mât 33 et deux jambes 35.

Un déflecteur 39 est formé par une épaisse feuille rectangulaire de feutrine souple, fixée par un de ses bords à la paroi interne 3'a du conteneur entre les deux ouvertures 9 et 11.

La feuille 39 comporte un baguette 41 parallèle à son bord fixé à la paroi 3'a, sensiblement à mi-distance de son bord opposé.

Cette baguette 41 est reliée par un lien 43 au mât 33 de la structure interne du conteneur 1'. Grâce au lien 41, qui peut être une chaine, un ressort, un câble, une barre ou une tige, la feuille de feutrine forme deux panneaux : un panneau formant une paroi supérieure inclinée 39a et un panneau vertical 39b formant une paroi de séparation entre déchets introduits par l'ouverture supérieure du conteneur et déchets introduits par son ouverture inférieure.

Le panneau 39a reçoit les déchets introduits par l'ouverture supérieure 9, amortit leur chute et les guide vers l'intérieur du conteneur en évitant l'ouverture inférieure 11. Le panneau 39b délimite un volume réservé pour l'introduction des déchets par l'ouverture inférieure 11.

En étant libre à son bord inférieur, le panneau 39b, qui est souple, est capable de laisser les bouteilles accumulées dans le conteneur s'agencer de façon optimale, tout en empêchant le remplissage d'un petit volume réservé à l'ouverture inférieure 11.

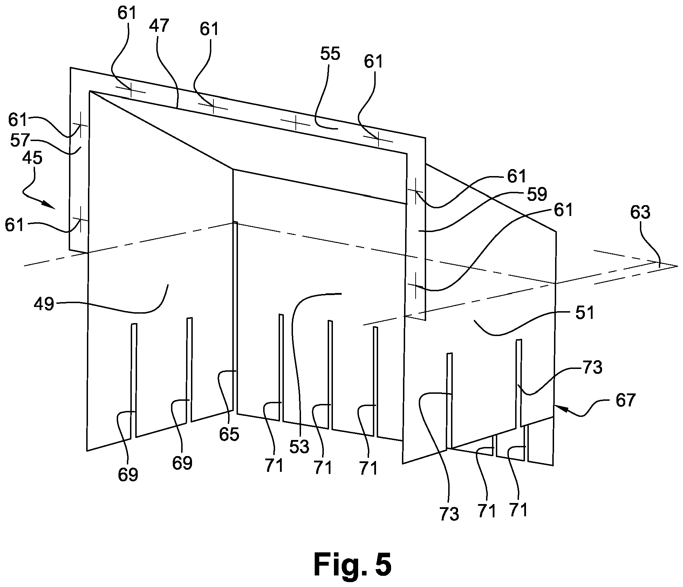

Dans la variante illustrée par la figure 5, le déflecteur 45 est un polyèdre réalisé en une seule pièce, par thermoformage d'une feuille de feutre en polyéthylène.

Comme le déflecteur de la figure 2, ce déflecteur 45 comprend un plan incliné supérieur 47, deux parois latérales 49 et 51, une paroi de fond 53 et des rebords de fixation 55, 57 et 59, munis de trous de fixation 61 permettant le rivetage du déflecteur 45 à la paroi intérieure du conteneur (non représenté) le recevant.

La paroi de fond 53 est une paroi de séparation entre déchets introduits par l'ouverture supérieure du conteneur et déchets introduits par son ouverture inférieure.

L'inclinaison du plan inclliné 47 est de 30°.

Dans toute sa partie située au dessus d'un plan 63 dont l'intersection avec le déflecteur est matérialisée par des trait interrompus, le déflecteur a une géométrie très voisine de celle du déflecteur de la figure 2.

En dessous du plan P, le déflecteur se prolonge verticalement par ses trois parois verticales 49, 51 et 53 (désignées « verticales », bien que susceptibles de ne pas l'être rigoureusement, c'est pourquoi on utilise aussi l'expression « sensiblement verticales »).

Chaque prolongement des parois est constitué par un pan de feutre, dissocié des pans voisins, de sorte qu'il n'existe aucune ligne de pliage ni aucune arête vive dans cette partie inférieure du déflecteur. En effet, un fente verticale 65, respectivement 67, s'étend depuis le plan 63 jusqu'en bas du déflecteur, à l'angle formé par les parois 49 et 53, respectivement 53 et 51.

Ainsi, les prolongement verticaux des parois 49, 51 et 53 forment des parois de séparation sensiblement verticales souples, c'est-à-dire aptes à se déformer pour s'adapter aux volumes de déchets présents dans le conteneur, de part et d'autre du déflecteur 45.

Pour accroître davantage la souplesse de chacun des pans verticaux, des fentes verticales supplémentaires 69, 71 et 73, plus courtes que les fentes 65 et 67, sont prévues sur chacun des pans, à partir de son bord inférieur.

Dans ce mode de réalisation comme dans les modes de réalisation précédents, le déflecteur 39, 13, 45 peut servir, si la matière dont il est constitué s'y prête, à absorber les bruits générés par la chute des déchets introduits par l'ouverture inférieure 11, en empêchant la propagation des ondes sonores dans tout le volume intérieur du conteneur.

Il est bien entendu que les modes de réalisation qui viennent d'être décrits ne présentent aucun caractère limitatif et qu'ils pourront recevoir toute modification désirable sans sortir pour cela du cadre de l'invention.

## Revendications

1. Conteneur d'apport volontaire pour la collecte de déchets, comprenant une ouverture supérieure (9) pour l'introduction des déchets et une ouverture inférieure (12) située à la verticale de l'ouverture supérieure (9), à une hauteur par rapport au sol permettant l'introduction des déchets par des personnes de petite taille, le conteneur comprenant en outre, dans son intérieur, entre l'ouverture supérieure (9) et l'ouverture inférieure (11), un déflecteur (13 ; 39 ; 45) qui est positionné de manière à recevoir des déchets introduits par l'ouverture (9) et chutant dans le conteneur, ledit déflecteur étant réalisé en un matériau apte à amortir la chute des déchets et étant conformé pour guider les déchets depuis l'ouverture supérieure (9) d'introduction des déchets, sur une trajectoire dégageant l'ouverture inférieure (11) d'introduction des déchets, jusqu'à un emplacement de chute, à l'intérieur du conteneur, qui est plus bas et horizontalement espacé de l'ouverture supérieure (9) d'introduction des déchets, le déflecteur comprenant au moins une paroi de séparation (21 ; 39b ; 49,51,53) entre déchets introduits par l'ouverture supérieure (9) et déchets introduits par l'ouverture inférieure (11), cette paroi étant sensiblement verticale, **caractérisé en ce que** ladite paroi de séparation est souple, c'est-à-dire apte à se déformer pour s'adapter aux volumes de déchets présents de part et d'autre de ladite paroi de séparation.

2. Conteneur selon la revendication 1, dans lequel le déflecteur (13 ; 39) est réalisé en un matériau phoniquement isolant.

3. Conteneur selon la revendication 1 ou 2, dans lequel le déflecteur (13 ; 39 ; 45) est réalisé en un feutre polyéthylène.

4. Conteneur selon l'une des revendications 1 à 3, dans lequel le déflecteur (13 ; 39 ; 45) comprend une paroi supérieure (15 ; 39a ; 47) formant un plan incliné vers l'intérieur du conteneur.

5. Conteneur selon l'une des revendications 1 à 4, dans lequel le déflecteur (39) est réalisé par une feuille souple liée à une structure rigide (33) du conteneur par un lien (41) qui lui confère une forme en deux parties, à savoir un panneau formant la paroi supérieure (39a), et un panneau (39b) sensiblement vertical.

6. Conteneur selon l'une quelconque des revendications 1 à 5, dans lequel le déflecteur comprend des parois à double épaisseur dans sa partie supérieure, notamment dans ses parties les plus fortement sollicités par la chute des déchets ou par les fixations au conteneur.

7. Conteneur selon l'une quelconque des revendications 1 à 6, dans lequel le déflecteur (45) est réalisé en une seule et même pièce, dont la tenue en partie supérieure et la souplesse en partie inférieure sont obtenues par sa forme.

8. Conteneur selon la revendication 7, dans lequel la partie supérieure du déflecteur (45) est un polyèdre possédant des arêtes vives lui conférant une rigidité suffisante pour qu'il soit capable de dévier des déchets chutant dans le conteneur par l'ouverture supérieure, tandis que la paroi de séparation du déflecteur, réalisée dans le même matériau, n'est formée que d'un ou plusieurs pans (49, 51, 53) dépourvus d'arêtes vives.

9. Conteneur selon la revendication 8, dans lequel les arêtes vives du polyèdre sont obtenues par pliage ou soudage ou collage.

## Patentansprüche

1. Wertstoff-Sammelbehälter zum Sammeln von Abfällen, umfassend eine obere Öffnung (9) zum Einbringen der Abfälle und eine untere Öffnung (11), die sich vertikal zu der oberen Öffnung (9) befindet, in einer Höhe relativ zum Boden, die das Einbringen der Abfälle durch Personen mit kleiner Körpergröße gestattet, wobei der Behälter ferner, in seinem Inneren, zwischen der oberen Öffnung (9) und der unteren Öffnung (11), ein Leitelement (13; 39; 45) umfasst, das in der Form positioniert ist, dass es die durch die Öffnung (9) eingebrachten und in den Behälter herabfallenden Abfälle aufnimmt, wobei das Leitelement aus einem Material realisiert ist, das dazu in der Lage ist, das Herabfallen der Abfälle zu dämpfen, und dazu ausgebildet ist, die Abfälle von der oberen Öffnung (9) zum Einbringen der Abfälle auf einer Bahn, welche die untere Öffnung (11) zum Einbringen der Abfälle freigibt, bis zu einer Fallstelle, im Inneren des Behälters, zu führen, die niedriger ist und von der oberen Öffnung (9) zum Einbringen der Abfälle horizontal beabstandet ist, leitet, wobei das Leitelement mindestens eine Wand zum Trennen (21; 39b; 49, 51, 53) zwischen Abfällen, die durch die obere Öffnung (9) eingebracht werden, und Abfällen, die durch die untere Öffnung (11) eingebracht werden, umfasst, wobei diese Wand im Wesentlichen vertikal ist, **dadurch gekennzeichnet, dass** die Trennwand biegsam ist, das heißt, verformbar ist, um sich an die Volumen von Abfällen anzupassen, die auf beiden Seiten der Trennwand vorhanden sind.

2. Behälter nach Anspruch 1, wobei das Leitelement (13; 39) aus einem schallisolierenden Material realisiert ist.

3. Behälter nach Anspruch 1 oder 2, wobei das Leitelement (13; 39; 45) aus einem Polyethylenfilz realisiert ist.

4. Behälter nach einem der Ansprüche 1 bis 3, wobei das Leitelement (13; 39; 45) eine obere Wand (15; 39a; 47) umfasst, die eine zu dem Inneren des Behälters hin geneigte Ebene bildet.

5. Behälter nach einem der Ansprüche 1 bis 4, wobei das Leitelement (39) durch eine flexible Folie realisiert ist, die mit einer steifen Struktur (33) des Behälters durch eine Verbindung (41) verbunden ist, die ihm eine Form aus zwei Teilen verleiht, das heißt eine Platte, welche die obere Wand (39a) bildet, und eine Platte (39b), die im Wesentlichen vertikal ist.

6. Behälter nach einem der Ansprüche 1 bis 5, wobei das Leitelement Wände mit doppelter Dicke in seinem oberen Teil umfasst, insbesondere in seinen Teilen, die durch das Herabfallen der Abfälle oder durch die Befestigungen an dem Behälter am stärksten beansprucht sind.

7. Behälter nach einem der Ansprüche 1 bis 6, wobei das Leitelement (45) aus einem einzigen gleichen Stück gebildet ist, dessen Widerstandsfähigkeit im oberen Teil und dessen Flexibilität im unteren Teil durch seine Form erhalten werden.

8. Behälter nach Anspruch 7, wobei der obere Teil des Leitelements (45) ein Polyeder mit scharfen Kanten ist, die ihm eine ausreichende Steifigkeit verleihen, damit er in der Lage ist, Abfälle, die durch die obere Öffnung in den Behälter herabfallen, umzuleiten, während die Trennwand des Leitelements, die aus dem gleichen Material realisiert ist, nur von einer oder mehreren Fläche(n) (49, 51, 53) ohne scharfe Kanten gebildet ist.

9. Behälter nach Anspruch 8, wobei die scharfen Kanten des Polyeders durch Biegen oder Schweißen oder Kleben erhalten werden.

## Claims

1. Voluntary waste disposal container comprising an upper opening (9) for the introduction of waste and a lower opening (12) positioned vertically below the upper opening (9), at a height relative to the ground allowing the introduction of waste by persons of small size, the container further comprising, in its interior, between the upper opening (9) and the lower opening (11), a deflector (13; 39; 45) which is positioned to receive waste introduced through the opening (9) and falling into the container, said deflector being made of a material able to dampen the fall of the waste and being shaped to guide the waste from the upper waste introduction opening (9) on a path clearing the lower waste introduction opening (11) to a drop location, inside the container, which is lower and distanced horizontally from the upper waste introduction opening (9), the deflector comprising at least one separating wall (21; 39b; 49, 51, 53) between waste introduced through the upper opening (9) and waste introduced through the lower opening (11), this wall being substantially vertical, **characterised in that** said separating wall is flexible, in other words capable of deforming to adapt to the volumes of waste present on either side of said separating wall.

2. Container according to claim 1, wherein the deflector (13; 39) is made of acoustically insulating material.

3. Container according to claim 1 or 2, wherein the deflector (13; 39; 45) is made of a polyethylene felt.

4. Container according to one of claims 1 to 3, wherein the deflector (13; 39; 45) comprises an upper wall (15; 39a; 47) forming an inclined plane towards the inside of the container.

5. Container according to one of claims 1 to 4, wherein the deflector (39) consists of a flexible sheet connected to a rigid structure (33) of the container by a link (41) which gives it a shape in two parts, namely a panel forming the upper wall (39a), and a substantially vertical panel (39b).

6. Container according to any one of claims 1 to 5, wherein the deflector comprises walls of double thickness in its upper part, in particular in the parts most highly stressed by falling waste or by the attachments to the container.

7. Container according to any one of claims 1 to 6, wherein the deflector (45) is made in a single piece, whose strength in the upper part and flexibility in the lower part are due to its shape.

8. Container according to claim 7, wherein the upper part of the deflector (45) is a polyhedron having sharp edges making it rigid enough to deflect the waste falling into the container through the upper opening, while the separating wall of the deflector, made of the same material, consists only of one or more flat sections (49, 51, 53) with no sharp edges.

9. Container according to claim 8, wherein the sharp edges of the polyhedron are obtained by folding or welding or bonding.
